(19)

Europäisches
Patentamt
European
Patent Office
Office européen
des brevets

(11) **EP 2 357 523 A1**

(12) **EUROPEAN PATENT APPLICATION**
published in accordance with Art. 153(4) EPC

(43) Date of publication:
**17.08.2011 Bulletin 2011/33**

(21) Application number: **09831691.2**

(22) Date of filing: **08.12.2009**

(51) Int Cl.:
*G02F 1/167* (2006.01)          *G02F 1/17* (2006.01)
*G09G 3/20* (2006.01)          *G09G 3/34* (2006.01)

(86) International application number:
**PCT/JP2009/006694**

(87) International publication number:
**WO 2010/067584 (17.06.2010 Gazette 2010/24)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.12.2008 JP 2008317090**

(71) Applicant: **Bridgestone Corporation
Tokyo 104-8340 (JP)**

(72) Inventors:
• **YAMADA, Shuhei
Kodaira-shi
Tokyo 187-8531 (JP)**
• **TAMURA, Hajime
Kodaira-shi
Tokyo 187-8531 (JP)**

• **SHOJI, Takanori
Kodaira-shi
Tokyo 187-8531 (JP)**
• **ISHII, Keita
Kodaira-shi
Tokyo 187-8531 (JP)**
• **TSUCHIDA, Shinya
Kodaira-shi
Tokyo 187-8531 (JP)**
• **AOKI, Kimitoshi
Kodaira-shi
Tokyo 187-8531 (JP)**

(74) Representative: **Lamb, Martin John Carstairs
Marks & Clerk LLP
90 Long Acre
London
WC2E 9RA (GB)**

(54) **INFORMATION DISPLAY PANEL DRIVE METHOD**

(57)      Provided is a method of driving an information display panel in which at least two types of display media comprised of particle groups containing chargeable particles are sealed between two opposed substrates, at least one substrate being transparent, and a voltage is applied across a pair of opposed pixel electrodes formed by providing conductive films to the respective substrates to move the display media, thereby displaying an information image, wherein, in a series of alternating voltage pulses applied at the time of deleting the information image displayed on the information display panel, there is provided an OFF time, which is a period during which application voltage of 0 volt is maintained during change of polarity of each pulse voltage. With this configuration, it is possible to provide a method of driving an information display panel capable of achieving the longer lifetime of a battery at the time when the panel is driven by the battery and of preventing drop of the voltage from a power supply, by reducing a peak value of the electric current occurring at the time of deleting with the alternating voltage.

*FIG. 3*

EP 2 357 523 A1

**Description**

TECHNICAL FIELD

The present invention relates to a method of driving an information display panel in which at least two types of display media comprised of particle groups containing chargeable particles are sealed between two opposed substrates, at least one substrate being transparent, and, voltage is applied across a pair of opposed pixel electrodes formed by providing conductive films to the respective substrates to move the display media, thereby displaying an information image, and in particular, relates to a method of driving the information display panel used at the time of deleting the information image displayed on the information display panel.
It should be noted that, in the present invention, the wording "drawing" means displaying the information image, and the wording "deleting" means displaying an solid image once before the drawing. Further, the wording "ON time" means a period during which a pulse voltage is applied across the pair of electrodes at the time of drawing or deleting the information image, and the wording "OFF time" means a period during which the pulse voltage applied across the pair of electrodes for drawing or deleting the information image is not applied and a potential difference between the pair of electrodes is 0 volt.

RELATED ART

Conventionally, various methods are known as a method of driving an information display panel in which: a display medium comprised of a particle group containing chargeable particles is sealed between two opposed substrates, at least one substrate being transparent; voltage is applied across a pair of opposed pixel electrodes formed by providing conductive films to the respective substrates to drive the display medium, thereby displaying information such as an image.

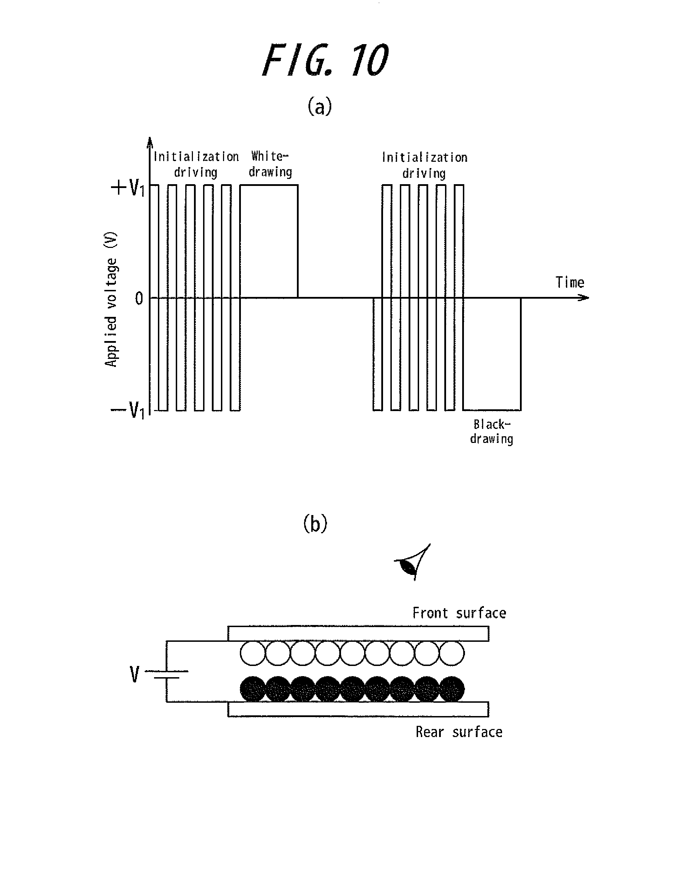

Of the methods, there is known a driving method in which an alternating voltage is applied across the electrodes as initialization driving at the time of deleting the information image displayed on the information display panel, to prevent occurrence of aggregation of the particles constituting the display medium, and of adhesion and aggregation of the particles constituting the display medium to panel-constituting members even if displaying is repeated (see, for example, Japanese Patent Application Laid-open No. 2003-5227). FIG. 10(a) and FIG. 10(b) are diagrams for explaining one example of the conventional driving method described above. FIG. 10(a) illustrates waveforms of voltage applied to the panel, and FIG. 10(b) is a schematic view illustrating a cross section of the panel as well as the voltage applied to the panel. In the drawings, the applied voltage is a voltage $V_1$ higher than or equal to a threshold value $V_0$ that can generate the electric field capable of overcoming the adhesive force between the surface of the substrate and chargeable particles constituting the display medium to drive the chargeable particles. Note that the electric current in this specification refers to the sum of the charging current applied to the panel and the current necessary to drive the chargeable particles.

DISCLOSURE OF THE INVENTION

PROBLEMS TO BE SOLVED BY THE INVENTION

With the conventional alternating voltage described above, as the leading edge of the applied voltage is made steeper (shortening the rise time), the particles can move easier, whereby it is possible to obtain higher contrast. Therefore, it is desirable to make the leading edge as steep as possible, and it is known from the past studies that the rectangular pulse is the best mode. However, this case increases peak values of the electric current consumed at the time of changing the polarity of the applied voltage. If the peak value of the current increases, there occur problems that: (1) when the panel is driven by a battery, the burden on the battery increases, which leads to shorter battery lifetime, and (2) voltage drop occurs to the voltage at the power supply due to the peak current; this causes a control circuit to be reset, which makes it impossible to perform a so-called panel driving such as display rewriting before the battery reaches its lifetime.

An object of the present invention is to solve the problems described above, and to provide a method of driving an information display panel capable of achieving the longer lifetime of a battery at the time when a panel is driven by the battery and of preventing the drop of the voltage from a power supply, by applying an alternating voltage to reduce a peak value of current at the time of deleting the displayed information image.

MEANS FOR SOLVING THE PROBLEM

A method of driving an information display panel according to the present invention provides a method of driving an information display panel in which at least two types of display media comprised of particle groups containing chargeable particles are sealed between two opposed substrates, at least one substrate being transparent, and a voltage is applied across a pair of opposed pixel electrodes formed by providing conductive films to the respective substrates to move the display media, thereby displaying an information image, wherein, in a series of alternating voltage pulses applied at the time of deleting the information image displayed on the information display panel, there is provided an OFF time, which is a period during which application voltage of 0 volt is maintained during change of polarity of each pulse voltage.

Further, preferred examples of the method of driving an information display panel according to the present invention are as follow: in the series of alternating voltage pulses, the OFF time is set in the range of 0.1×T to 2×T where T is an ON time which is a period during which the pulse voltage is applied; and, the ON time, which is a period during which the pulse voltage is applied, is set in the series of alternating voltage pulses such that the OFF time between the end of application of a pulse voltage having a first polarity and the start of application of a pulse voltage having a second polarity is set in the range of 0.1×T1 to 2×T1, and the OFF time between the end of application of the pulse voltage having the second polarity and the start of application of the pulse voltage having the first polarity is set in the range of 0.1×T2 to 2×T2 when T1 is a period during which the pulse voltage having the first polarity is applied in ON time, and T2 is a period during which the pulse voltage having the second polarity is applied in the ON time.

## EFFECT OF THE INVENTION

According to the present invention, by providing the OFF time, which is a period during which application voltage of 0 volt is maintained during change of polarity of each pulse voltage in a series of alternating voltage pulses applied at the time of deleting the information image displayed on the information display panel, it is possible to suppress the peak current occurring at the time of change of polarity as compared with the case where the OFF time is not provided. Therefore, it is possible to obtain the method of driving the information display panel capable of achieving the longer lifetime of a battery at the time when the panel is driven by the battery and of preventing drop of the voltage from a power supply, by reducing a peak value of current at the time of deleting the information image.

## BRIEF DESCRIPTION OF THE DRAWINGS

FIG. 1(a) and FIG. 1(b) are diagrams for explaining an example of an information display panel to which a driving method according to the present invention is directed.

FIG. 2(a) and FIG. 2(b) are diagrams for explaining another example of an information display panel to which the driving method according to the present invention is directed.
FIG. 3 is a diagram for explaining an example of a voltage waveform in the method of driving the information display panel according to the present invention.
FIG. 4 is a diagram for explaining another example of a voltage waveform in the method of driving the information display panel according to the present invention.
FIG. 5 is a diagram for explaining still another example of a voltage waveform in the method of driving the information display panel according to the present invention.

FIG. 6 is a diagram for explaining still another example of a voltage waveform in the method of driving the information display panel according to the present invention.
FIG. 7 is a diagram for explaining a configuration of an experiment device used at the time of evaluating the method of driving the information display panel according to the present invention.
FIG. 8 is a graph illustrating a relationship between the applied voltage and the current (peak current value) in Example.
FIG. 9 is a graph illustrating a relationship between the peak current value and OFF time obtained from an experiment.
FIGS. 10(a) and 10(b) are diagrams for explaining an example of a conventional driving method described above.

## BEST MODE FOR CARRYING OUT THE INVENTION

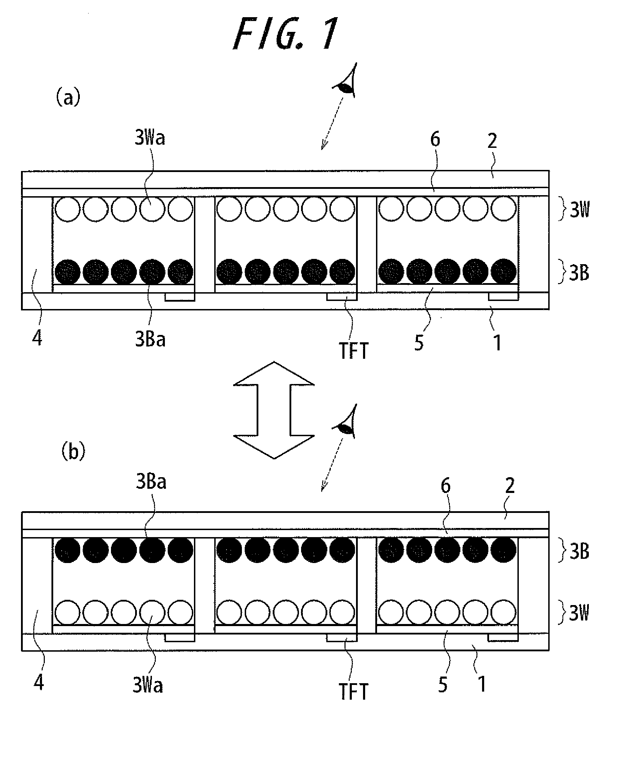

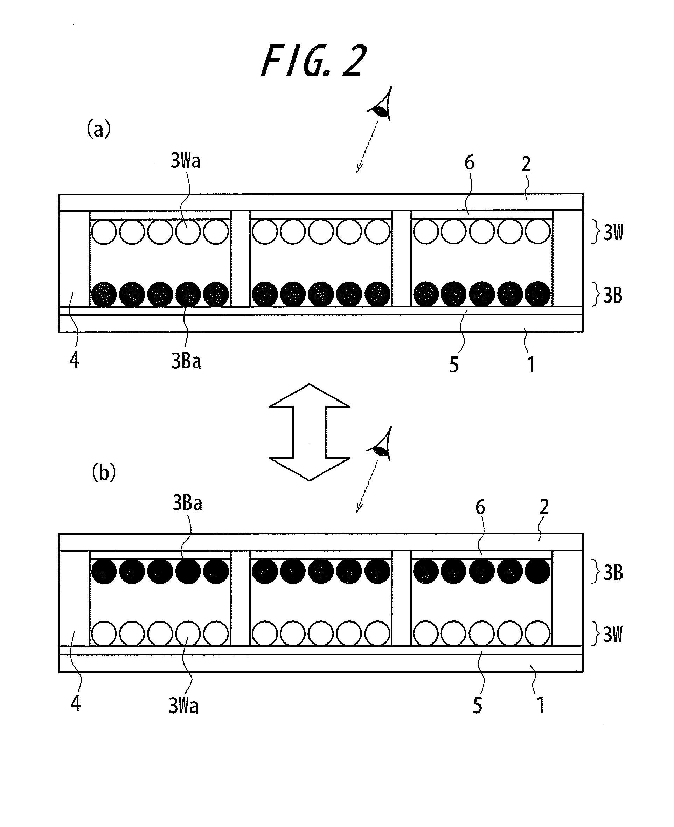

First, description will be made of a configuration of an information display panel to which a driving method according to the present invention is applied. In the information display panel to which the driving method according to the present invention is applied, display media comprised of particle groups containing chargeable particles are sealed between two opposing substrates, and an electric field is applied to the display medium. The display media are drawn by force resulting from the electric field, Coulomb force or the like along the direction of the applied electric field, and move due to change of directions of the applied electric field, whereby information such as an image is displayed. Therefore, the display information panel needs to be designed so as to be able to uniformly move the display medium, and maintain stability at the time when the displayed information is repeatedly rewritten, or when the displayed information continues to be displayed. In addition to the attraction force caused by the Coulomb force between the respective particles, the force acting on the particles constituting the display medium may include electric imaging force with the electrode or substrate, intermolecular force, liquid bonding force, gravity and the like.
An example of the information display panel to which the driving method according to the present invention is directed will be described with reference to FIGS. 1(a) and 1(b) through FIGS. 2(a) and 2(b).
In the example illustrated in FIGS. 1(a) and 1(b), at least two types of display media (in this example, a white color display medium 3W comprised of a particle group containing negatively charged white color particles 3Wa and a black color display medium 3B comprised of a particle group containing positively charged black color particles 3Ba are illustrated) comprised of particle groups containing particles having at least an optical reflectivity and a charging property, which are different between the display medium types, are moved perpendicular to substrates 1, 2 in each cell formed by a partition wall 4 in accordance with an electric field generated by applying a voltage across a pair of pixel electrodes formed by an electrode 5 (pixel electrode with TFT) provided to the substrate 1 and an electrode 6 (common electrode) provided to the substrate 2, the respective electrodes of which face each other. Then, a white display is performed by making the white color display medium 3 W visually recognized by an viewer as illustrated in FIG. 1(a), or a black display is performed by making the black color display medium 3B visually recognized by the viewer as illustrated in FIG. 1(b), whereby matrix display of white and black dots can be performed. Note that, in FIGS. 1 (a) and 1(b), a partition wall existing at the frontward side is omitted.

In an example illustrated in FIGS. 2(a) and 2(b), at least two types of display media (in this example, a white color display medium 3 W comprised of a particle group containing negatively charged white color particles 3Wa and a black color display medium 3B comprised of a particle group containing positively charged black color particles 3Ba are illustrated) comprised of particle groups containing particles having at least an optical reflectivity and a charging property, which are different between the display medium types, are moved perpendicular to substrates 1, 2 in each cell formed by a partition wall 4 in accordance with an electric field generated by applying a voltage across a pair of pixel electrodes formed by a line electrode 6 provided to the substrate 2 and a line electrode 5 provided to the substrate 1 in a manner that the respective electrodes face each other and perpendicularly intersect each other. Then, a white display is performed by making the white color display medium 3W visually recognized by a viewer as illustrated in FIG. 2 (a), or a black display is performed by making the black color display medium 3B visually recognized by the viewer as illustrated in FIG. 2(b), whereby matrix display of white and black of dots can be performed. Note that, in FIGS. 2(a) and 2(b), a partition wall existing at the frontward side is omitted.

The driving method according to the present invention is characterized in that, with the information display panel having the configuration described above, there is provided an OFF time, which is a period during which application voltage of 0 volt is maintained during change of polarity of pulse voltages in a series of alternating voltage pulses applied at the time of deleting the information image displayed on the information display panel. Note that the alternating voltage applied at the time of deleting and having the OFF time may be applied to the entire panel or may be applied to a part of the panel. Either a passive drive or active drive may be possible for the driving method according to the present invention. Further, the waveform of voltages constituting the alternating voltage includes a rectangular wave, trapezoidal wave, sine wave or triangular wave, and is not particularly limited. However, the rectangular wave is the most effective waveform to sufficiently delete the previously displayed information image. It is not necessary to keep the amplitude, cycle and the number of repetition of the voltage waveform at a constant.

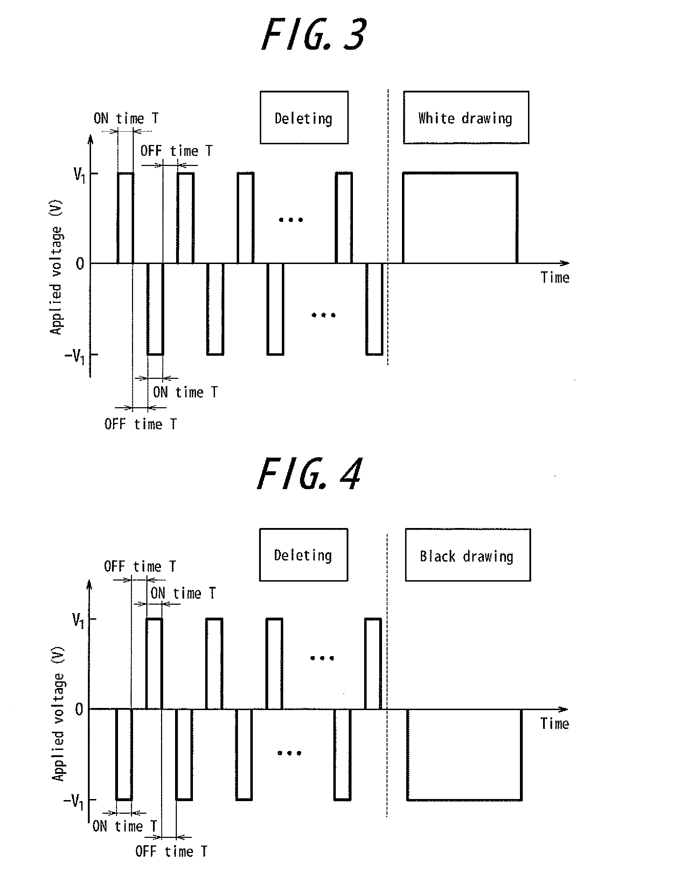

Below, a specific example of the voltage waveform will be described with reference to FIG. 3 to FIG. 6. In this example, the information display panel employs two types of display media: a display medium comprised of a particle group containing positively charged particles and a display medium comprised of a particle group containing negatively charged particles. However, the voltage waveform employed in the driving method of the present invention is not limited to the following example.

FIG. 3 is a diagram for explaining an example of the voltage waveform in the method of driving the information display panel according to the present invention. In the example illustrated in FIG. 3, white drawing is performed on the display by applying a positive voltage, in other words, by applying a voltage having a positive property at an electrode on the viewer side constituting the information display panel relative to an electrode on the rear surface side when the electrode on the viewer side is a reference (for example, the electrode on the viewer side is $+V_1(V)$, whereas the electrode on the rear surface side is 0 (V)) to move the negatively charged white color particles toward the viewer side while moving the positively charged black color particles toward the rear surface side.

In the example illustrated in FIG. 3, when deleting, which is performed before the information image is drawn as described above, is performed by the alternating voltage in which a pulse voltage having the positive polarity and a pulse voltage having the negative polarity are alternately arranged, there is provided the OFF time in the alternating voltage, which is a period during which application voltage of 0 volt is maintained during change of polarity, and the alternating voltage having the OFF time is applied across the pair of opposed pixel electrodes. Note that, for the alternating voltage for deleting in this example, any waveform, any level of the waveform and any amplitude of the waveform may be used for the ON time, provided that the pulse voltage having the positive polarity and the pulse voltage having the negative polarity are alternately arranged. However, it is necessary that the pulse voltage immediately before the drawing has a polarity opposite to the polarity of the pulse voltage applied for the purpose of performing the intended drawing, in other words, is the pulse voltage having the negative polarity.

FIG. 4 is a diagram for explaining another example of the voltage waveform in the method of driving the information display panel according to the present invention. In the example illustrated in FIG. 4, black drawing is performed on the display by applying a negative voltage, in other words, by applying a voltage having a negative property at an electrode on the viewer side constituting the information display panel relative to an electrode on the rear surface side when the electrode on the viewer side is a reference (for example, the electrode on the viewer side is $-V_1(V)$, whereas the electrode on the rear surface side is 0 (V)) to move the positively charged black color particles toward the viewer side while moving the negatively charged white color particles toward the rear surface side.

In the example illustrated in FIG. 4, when deleting, which is performed before the information image is drawn as described above, is performed by the alternating voltage in which a pulse voltage having the positive polarity and a pulse voltage having the negative polarity are alternately arranged, there is provided the OFF time in the alternating voltage, which is a period during which application voltage of 0 volt is maintained during change of polarity, and the alternating voltage having the OFF time is applied across the pair of opposed pixel electrodes. Note that, for the alternating voltage for deleting in this example, any waveform, level of the waveform and amplitude of the waveform may be used for the ON time, provided that the pulse voltage having the positive polarity and the pulse voltage having the negative polarity are alternately arranged. However, it is necessary that the pulse voltage immediately before the drawing has a polarity opposite to the polarity of the pulse voltage applied for the purpose of performing the intended drawing, in other words, is the pulse voltage having the positive polarity.

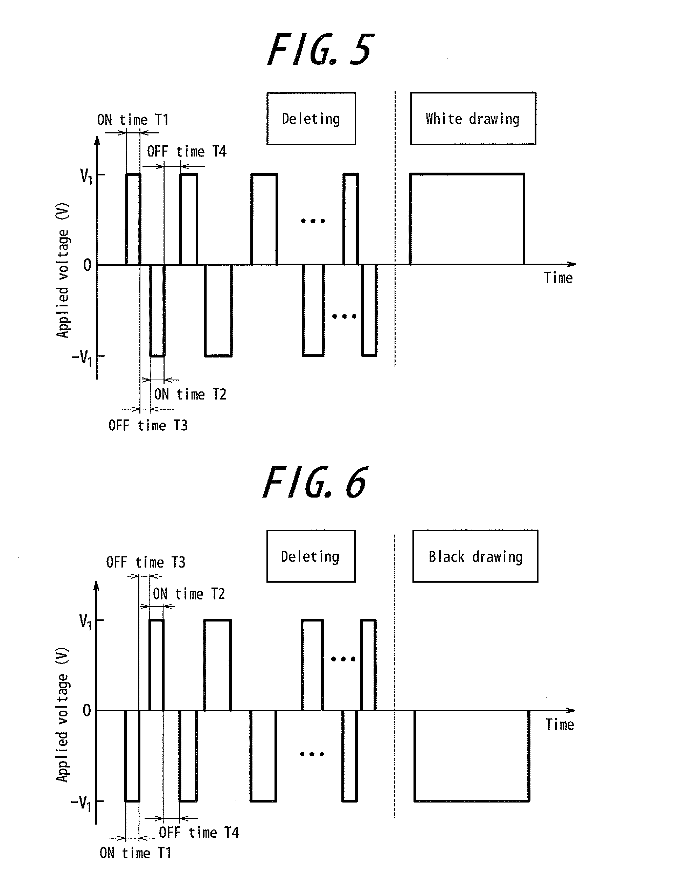

FIG. 5 and FIG. 6 are diagrams for explaining another examples of the voltage waveform in the method of driving the information display panel according to the present invention. In the examples illustrated in FIG. 3 and FIG. 4, the ON time and the OFF time are set to be an equal period T. However, in the examples illustrated in FIG. 5 and FIG. 6, the ON time is set so as to have different periods T1 and T2, and the OFF time is set so as to have different periods T3 and T4. As described above, in the present invention, each of the ON time and the OFF time may be set so as to be an equal period or may be formed by different periods.

In the examples illustrated in FIG. 3 and FIG. 4, the length of the OFF time is not specifically set, but is preferably less than or equal to 2xT where T is the length of the ON time of the alternating voltage. This is because the longer OFF time leads to the longer deleting time, which results in the increase in the power consumption. Further, from the example described later, it can be known that it is preferable that the OFF time is in the range of $0.1 \times T$ to $2 \times T$, and that the ON time, which is a period during which the pulse voltage is applied, is set such that the OFF time between the end of application of the pulse voltage having a first polarity and the start of application of the pulse voltage having a second polarity is set in the range of $0.1 \times T1$ to $2 \times T1$, and the OFF time between the end of application of the pulse voltage having the second polarity and the start of application of the pulse voltage having the first polarity is set in the range of $0.1 \times T2$ to $2 \times T2$ where T1 is a period during which pulse voltage having the first polarity is applied in the ON time, and T2 is a period during which pulse voltage having the second polarity is applied in the ON time.

Next, description will be made of each member constituting the information display panel to which the driving method according to the present invention is directed.

As for substrates, at least one of the substrates is a transparent substrate through which the display media can be recognized from the outside of the panel, and is formed preferably of a material having high transmissivity for the visible light and favorable heat-resisting property. On the other hand, the substrate on the rear surface side, which is the other substrate, may be transparent, or may not be transparent. Examples of substrate materials include an organic-polymer-based substrate such as polyethylene terephthalate (PET), polyethylene naphthalate (PEN), polyethylene (PE), polycarbonate (PC), polyimide (PI), polyethersulfone (PES) and acrylic, a glass sheet, a quartz sheet, a metal sheet coated with an insulation film and the like. Of the materials described above, a transparent material is used for the display surface side. The thickness of the substrate is preferably in the range of 2 to 2000 μm, and more preferably in the range of 5 to 1000 μm, In the case where the substrate is too thin, it is difficult to maintain the strength and uniformity of the space between the substrates. On the other hand, in the case where the thickness exceeds 2000 μm, inconvenience occurs at the time of making the display panel thinner.

Examples of materials for forming the electrode include: metals such as aluminum, silver, nickel, copper and gold; conductive metallic oxides such as indium tin oxide (ITO), indium zinc oxide (IZO), aluminum-doped zinc oxide (AZO), indium oxide, conductive tin oxide, antimony tin oxide (ATO) and conductive zinc oxide; and conductive polymers such as polyaniline, polypyrrole and polythiophene, and depending on applications, a material/materials used for forming the electrode is/are selected from the materials described above. As a method of forming the electrode, it is possible to use: a method of subjecting the materials exemplified above to pattern formation to be a thin film shape by using a sputtering method, a vacuum deposition method, a chemical vapor deposition (CVD) method and a coating method; a method of laminating metal foils (for example, rolling copper-foil method); and a method of performing pattern formation by applying a mixture of conductive agent with solvent or synthetic resin binder. The electrode provided on the substrate on the viewer side (display surface side) needs to be transparent, whereas it is not necessary for the electrode provided on the substrate on the rear surface side to be transparent. In any case, it is possible to preferably use the above-described conductive materials that can be used for pattern formation. Note that the thickness of the electrode is set by considering the conductivity and optical transparency, and is in the range of 0.01 to 10 μm, preferably, in the range of 0,05 to 5 μm. For the material and thickness of the electrode provided on the substrate on the rear surface side, it is not necessary to consider the optical transparency.

Depending on application, a shape of a partition wall provided to the substrate is optimally set in accordance with types of display media concerning display, and shapes and arrangement of the electrode to be disposed, and is not limited flatly, and the width of the partition wall is set in the range of 2 to 100 μm, preferably, in the range of 3 to 50 μm. The height of the partition wall is set in the range of 10 to 500 μm, and preferably, in the range of 10 to 200 μm. The height of a partition wall for securing a gap between the substrates is set so as to match the gap between the substrates that is desired to be secured. The height of a partition wall disposed for partitioning the space between the substrates into cells is set to the height same as the gap between the substrate or to the height lower than the gap between the substrate. Further, it is considered that the partition wall is formed by a both-rib method of forming a rib on both of the opposing substrates 1, 2 and then connecting them, or by a single-rib method of forming a rib only on the single side substrate of the two substrates. In this invention, either method is possible.

Examples of the cells formed by the partition wall formed by the rib described above include a quadrangle shape, triangle shape, line shape, circle shape and hexagonal shape as viewed from the direction of the substrate plane, and examples of arrangement thereof include a lattice arrangement, honey-comb arrangement and network arrangement. It is preferable that a portion corresponding to a sectional portion of the partition wall visible from the display surface side (area of frame portion of cell) is set as small as possible, so that sharpness of the displaying state can be increased.

Examples of the method of forming the partition wall include a mold transfer method, a screen printing method, a sandblast method, a photolithographic method, and an additive method. Any of the methods described above can be preferably applied to the information display panel provided to the information display device according to the present invention, but, of the methods described above, the photolithographic method using a resist film or the mold transfer method is preferably used.

Next, the chargeable particles contained in the particle groups constituting the display media in the present invention will be described. The chargeable particles are employed in a manner that only the chargeable particles form the particles group to constitute the display media, or the chargeable particles are combined with other particles, and forms the particle group to constitute the display media.

The chargeable particles are formed principally by resins, and, may contain a charging control agent, colorant, inorganic additive and the like depending on applications. Examples of the resins, charging control agent, colorant, and other additives will be described below.

Examples of the resins include a urethane resin, urea resin, acrylic resin, polyester resin, acrylic urethane resin, acrylic urethane silicone resin, acrylic urethane fluororesin, acrylic fluororesin, silicone resin, acrylic silicone resin, epoxy resin, polystyrene resin, styrene-acrylic resin, polyolefin resin, butyral resin, vinylidene chloride resin, melamine resin, phenol resin, fluororesin, polycarbonate resin, polysulfone resin, polyether resin, and polyamide resin, and two or more resins may be mixed. In particular, from the viewpoint of control of adhesion strength with the substrate, it is preferable to use the acrylic urethane resin, acrylic silicone resin, acrylic fluororesin, acrylic urethane silicone resin, acrylic urethane fluororesin, fluororesin, and silicone resin.

There is not any particular limitation for the charging control agent, but examples of negative charging control agents include salicylic acid metal complex, metal-containing azo dye, metal-containing (including metal ion or metal atom) oil-soluble dye, quaternary ammonium salt compound, calixarene compounds, boron containing compound (benzilic acid boron complex), and nitroimidazole derivative. Examples of positive charging control agents include nigrosine dye, triphenylmethane-based compound, quaternary ammonium salt compound, polyamine resin, and imidazole derivative. Additionally, it may be possible to employ, as the charging control agent, ultrafine powder silica; ultrafine powder titanium oxide; metallic oxides such as ultrafine powder alumina; nitrogen containing ring compound such as pyridine and its derivative; and resin containing salt, various kinds of organic pigments, fluorine, chlorine and nitrogen.

As exemplified below, various types and colors of organic and inorganic pigments and dyes may be used as the colorant,

The black colorant includes carbon black, copper oxide, manganese dioxide, aniline black, active carbon and the like.

The blue colorant includes C.I. pigment blue 15:3, C.I. pigment blue 15, iron blue, cobalt blue, alkali blue lake, victoria blue lake, phthalocyanine blue, metal-free phthalocyanine blue, phthalocyanine blue partial chlorine compound, first sky blue, indanthrene blue BC and the like.

The red colorant includes colcothar, cadmium red, red lead, mercury sulfide, cadmium, permanent red 4R, lithol red, pyrazolone red, watching red, calcium salt, lake red D, brilliant carmine 6B, eosine lake, rhodamine lake B, alizarin lake, brilliant carmine 3B, C.I.pigment red 2 and the like.

The yellow colorant includes chrome yellow, zinc yellow, cadmium yellow, yellow iron oxide, mineral first yellow, nickel titanium yellow, navel yellow, naphthol yellow S, hansa yellow G, hansa yellow 10G, benzidine yellow G, benzidine yellow GR, quinoline yellow lake, permanent yellow NCG, tartrazine lake, C.I. pigment yellow 12, and the like.

The green colorant includes chrome green, chromium oxide, pigment green B, C.I. pigment green 7, Malachite green lake, final yellow green G and the like.

The orange colorant includes red chrome yellow, molybdenum orange, permanent orange GTR, pyrazolone orange, Balkan orange, indunsren brilliant orange RK, benzidine orange G, Indusren brilliant orange GK, C.I. pigment orange 31 and the like.

The purple colorant includes manganese purple, first violet B, methyl violet lake and the like.

The white colorant includes zinc oxide, titanium oxide, antimony white, zinc sulfide and the like.

The extender includes baryta powder, barium carbonate, clay, silica, white carbon, talc, alumina white and the like. Further, as various dyes such as basic dye, acidic dye, dispersion dye, direct dye and the like, there are nigrosine, methylene blue, rose bengal, quinoline yellow, ultramarine blue and the like.

Examples of inorganic additives include titanium oxide, zinc oxide, zinc sulfide, antimony oxide, calcium carbonate, white lead, talc, silica, calcium silicate, alumina white, cadmium yellow, cadmium red, cadmium orange, titanium yellow, iron blue, ultramarine blue, cobalt blue, cobalt green, cobalt violet, iron oxide, carbon black, manganese ferrite black, cobalt ferrite black, copper powder, aluminum powder and the like.

Each of the pigments and inorganic additives described above may be used alone or in combination. In particular, of the colorants described above, carbon black is preferable as the black pigment, and titanium oxide is preferable as the white pigment. Chargeable particles having a desired color can be manufactured by mixing the colorants described above.

Further, it is preferable that the chargeable particles (hereinafter, also referred to as particles) have an average particle diameter d(0.5) in the range of 1 to 20 μm, and the respective particles have a uniform size. In the case where the average particle diameter d(0.5) exceeds this range, the sharpness on the display deteriorates, and, on the other hand, in the case where the average particle diameter is smaller than this range, a cohesive force between the particles becomes undesirably large, which adversely affects the movement of the particles as the display medium.

Further, regarding the particle diameter distribution of the chargeable particles, a particle diameter distribution Span, which is defined by the following expression, is less than 5, preferably less than 3.

$$\mathrm{Span} = (\mathrm{d}(0.9) - \mathrm{d}(0.1))/\mathrm{d}(0.5)$$

(where, d(0.5) indicates a value of the particle diameter expressed by μm in which 50% of the particles have a diameter larger than this value and 50% of the particles have a diameter smaller than this value, d(0.1) indicates a value of the particle diameter expressed by μm in which a percentage of the particles having a diameter smaller than or equal to this value is 10%, and d(0.9) indicates a value of the particle diameter expressed by μm in which a percentage of the particles having a diameter smaller than or equal to this value is 90%.)

By setting the Span to less than or equal to 5, the sizes of the chargeable particles are made uniform and the particles can move as the uniform display medium.

Yet further, in the case where plural display media are used, it is important that the chargeable particles constituting the display media are set in a manner that a ratio of d(0.5) of the chargeable particles having the minimum average particle diameter d(0.5) relative to d(0.5) of the chargeable particles having the maximum average particle diameter d(0.5) is set to 10 or lower. Even if the particle diameter distribution Span is reduced, the chargeable particles having different electrification properties from each other are moved in the opposite directions to each other, and hence, it is preferable that the sizes of the particles are formed so as to be equal to each other in order to make the respective particles easily moved, which is realized by the above-described range.

It should be noted that the particle diameter distribution and the particle diameters of the particle described above can be obtained with a laser diffraction/scattering method and the like. By emitting a laser light to the particles to be measured, a light intensity distribution pattern occurs spatially due to a diffraction/scattering light. This light intensity pattern is in the relationship with the particle diameter, and hence, the particle diameters and the particle diameter distribution can be obtained.

In the present invention, the particle diameters and the particle diameter distribution are obtained on the basis of the volume-based distribution. More specifically, measurement is performed by using a measurement unit Mastersizer 2000 (Malvern Instruments Ltd.) such that particles are inserted into a stream of nitrogen gas, and the particle diameters and the particle diameter distribution are measured with the attached analysis software (software using a Mie theory and based on the volume-based distribution).

Further, in the case of an information display panel in which display media containing chargeable particles are driven in a space filled with gas, it is important to manage the gas located in the space between the panel substrates and surrounding the display media, which contributes to improvement of display stability. More specifically, it is important to set a relative humidity of the gas in the space at 60%RH at 25°C or lower, preferably, at 50%RH or lower.

The space described above refers to a portion existing between the opposing substrate 1 and substrate 2 in FIGS. 1(a) and 1(b) through FIGS. 2(a) and 2(b) and excluding the electrodes 5, 6 (in the case where the electrodes are provided on the inner side of the substrates), a portion occupied by the display media 3, a portion occupied by the partition wall 4 (in the case where the partition wall is provided) and a sealing portion of the panels, in other words, the space described above indicates a gas portion that is brought in contact with the display media.

Any type of gas can be used as the gas in the spaces described above, provided that humidity thereof falls within the humidity range described above. However, it is preferable to use a dried air, dried nitrogen, dried argon, dried helium, dried carbon dioxide, dried methane and the like. This gas needs to be sealed in the panels so as to keep the humidity inside thereof, and it is important, for example, to fill the display media, build the panels and implement other processes under a predetermined humidity environment, and then, to apply the seal material and sealing method so as to prevent the wet from intruding from the outside.

The space between the substrates of the information display panel to which the present invention is directed is set such that the display medium can move and contrast can be maintained, and is adjusted, generally, in the range of 2 to 500 $\mu$m, preferably, in the range of 5 to 200 $\mu$m.

In the case of the information display panel in which the chargeable particles are moved in the space filled with gas, the space between the substrates is set in the range of 10 to 100 $\mu$m, preferably, in the range of 10 to 50 $\mu$m. Further, it is preferable that the volume ratio of the display media relative to the space filled with gas between the substrates is in the range of 5 to 70%, and more preferably, in the range of 5 to 60%. Note that, in the case where the ratio exceeds 70%, movement of the particles as the display media is adversely affected, and on the other hand, in the case where the ratio is less than 5%, the contrast is likely to become unclear.

EXAMPLE

With various OFF times, peak current values are obtained using the panel and the experiment method described below under the following experiment environment, and are summarized with experiment results and consideration thereof.

(1) Experiment environment:

Temperature: 22.5°C
Humidity: 50%RH

(2) Information display panel used in the experiment

A panel of passive driving type using dot matrix display in which a white color display medium and a black color display medium are arranged.
Panel size: 4 inches
Resolution: 90 dpi
Gap between panel substrates: 40 $\mu$m

(3) Experiment method:

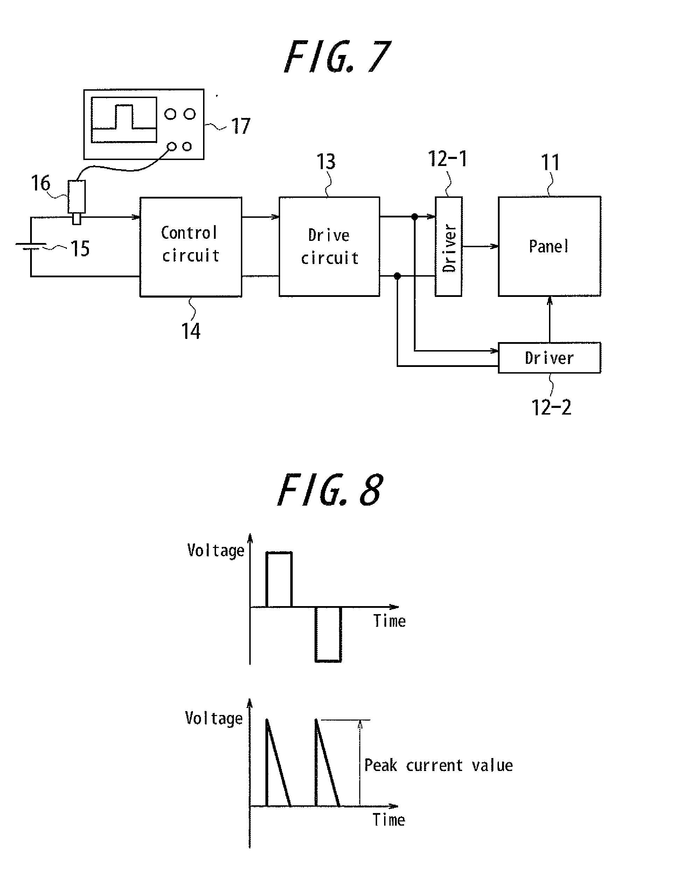

FIG. 7 is a diagram for explaining a configuration of an experiment device used for evaluating the method of driving the information display panel according to the present invention, In the example illustrated in FIG.

7, a reference number 11 denotes the information display panel; reference numbers 12-1 and 12-2 denote drivers for supplying the driving voltage to pixel electrodes provided to the respective substrates; a reference number 13 denotes a drive circuit; a reference number 14 denotes a control circuit; a reference number 15 denotes a power supply; a reference number 16 denotes an electric current probe (Tektronix TCP312); and, a reference number 17 denotes an oscilloscope (Tektronix TDS3054B).

With the experiment configuration illustrated in FIG. 7, voltage pulses were applied to the information display panel 11 through the drivers 12-1 and 12-2; a electric current flowing in the entire configuration was measured using the electric current probe 16; and, waveforms thereof were observed using the oscilloscope 17. The voltage pulses applied to the information display panel 11 had waveforms illustrated in FIG. 4. Positive/negative ON time was 500 us, and OFF time was in the range of 0 to 1000 $\mu$s. OFF time = 0 $\mu$s corresponds to the conventional example (FIG. 10). In all of the cases, the voltage level $V_1$ was 70 V. Then, changes of the current peak values were investigated by varying the OFF time at the time of deleting (FIG. 8 illustrates the relationship between the applied voltage and the current (peak current value)).

(4) Experiment result:

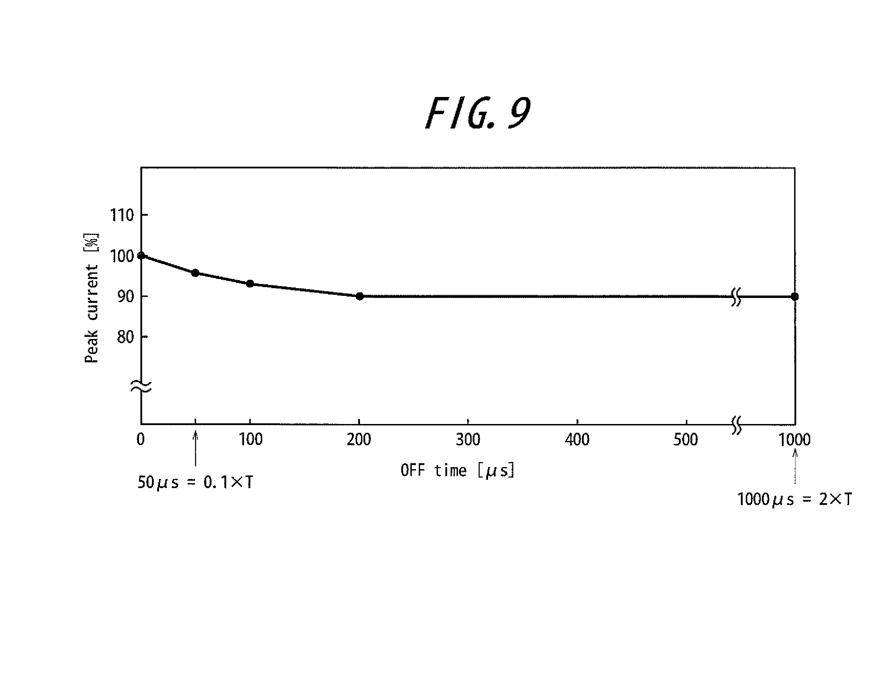

FIG. 9 illustrates a relationship between the peak current value obtained through the experiment describes above and the OFF times. In FIG. 9, the changes of the peak currents are indicated by percent with the conventional example of OFF time = 0 $\mu$s being set to 100%. From FIG. 9, it can be known that, as compared with OFF time = 0 $\mu$s (conventional example), the peak current value becomes lower with the increase in the OFF time, and saturates in the vicinity of OFF time = 200 $\mu$s. In this experiment in which the ON time is set to 500 $\mu$s, it can be known that the effect obtained by providing the OFF time to suppress the peak current value can be seen from the OFF time = 50 $\mu$s (corresponding to 0.1 times the ON time) to the OFF time = 1000 $\mu$s (corresponding to 2 times the ON time).

(5) Consideration:

It can be known that, by providing the OFF time to the voltage pulses applied to the panel, it is possible to suppress the peak current value. It can be said that, in this experiment configuration, by providing the OFF time of 200 $\mu$s or more, it is possible to minimize the peak current value at the time when the voltage pulses are applied to the panel. However, it is expected that the optimum value of the OFF time may vary depending on conditions such as a panel size, circuit configuration, the ON time of the voltage pulses and the level of the voltage pulses. Further, in the case where the OFF time further increases, the time required for deleting before display-rewriting increases, possibly increasing the total time required for rewriting the information image or adversely affecting the display quality. Therefore, it is necessary to adjust the optimum value of the OFF time by taking the configuration and the like into consideration.

It should be noted that, as the type in which the chargeable particles are moved to display, there is a type in which the chargeable particles are sealed in micro capsules together with an insulating liquid, and the micro capsules are disposed between the pair of the opposing electrodes. The present invention is applicable to driving such a type of the information display panel.

INDUSTRIAL APPLICABILITY

An information display panel to which the present invention is directed is suitable for use in: a display unit of a mobile device such as a notebook computer, a PDA, a cell phone and a handy terminal; an electronic paper such as an electronic book, an electronic newspaper and an electronic manual (instruction manual); a message board such as a billboard, a poster and a blackboard; a display unit of a calculator, an electrical appliance, an automobile part and the like; a card display unit of a point card and an IC card; a display unit of an electronic advertisement, an electronic POP (point of presence, point of purchase advertizing), an electronic price tag, an electronic price shelf-tag, an electronic music score and a RF-ID device; and, a display unit that connects with an external display rewriting means to display and rewrite (so called rewritable paper).

**Claims**

1. A method of driving an information display panel in which at least two types of display media comprised of particle groups containing chargeable particles are sealed between two opposed substrates, at least one substrate being transparent, and a voltage is applied across a pair of opposed pixel electrodes formed by providing conductive films to the respective substrates to move the display media, thereby displaying an information image, wherein, in a series of alternating voltage pulses applied at the time of deleting the information image displayed on the information display panel, there is provided an OFF time, which is a period during which application voltage of 0 volt is maintained during change of polarity of each pulse voltage.

2. The method of driving an information display panel according to claim 1, wherein in the series of alternating voltage pulses, the OFF time is set in the range of $0.1 \times T$ to $2 \times T$ where T is an ON time which is a period during which the pulse voltage is applied.

3. The method of driving an information display panel according to claim 1 or 2, wherein an ON time, which is a period during which the pulse voltage is applied, is set in the series of alternating voltage pulses such that the OFF time between the end of application of a pulse voltage having a first polarity and the start of application of a pulse voltage having a second polarity is set in the range of $0.1 \times T1$ to $2 \times T1$, and the OFF time between the end of application of the pulse voltage having the second polarity and the start of application of the pulse voltage having the first polarity is set in the range of $0.1 \times T2$ to $2 \times T2$ when T1 is a period during which the pulse voltage having the first polarity is applied in ON time, and T2 is a period during which the pulse voltage having the second polarity is applied in the ON time.

# FIG. 1

(a)

(b)

# FIG. 2

(a)

(b)

# FIG. 3

# FIG. 4

## FIG. 5

## FIG. 6

# FIG. 7

# FIG. 8

# FIG. 9

Peak current [%]

110

100

90

80

0    100    200    300    400    500    1000

OFF time [μs]

50μs = 0.1×T

1000μs = 2×T

EP 2 357 523 A1

# FIG. 10

## (a)

## (b)

**INTERNATIONAL SEARCH REPORT**

| | International application No. |
|---|---|
| | PCT/JP2009/006694 |

A. CLASSIFICATION OF SUBJECT MATTER
*G02F1/167*(2006.01)i, *G02F1/17*(2006.01)i, *G09G3/20*(2006.01)i, *G09G3/34*
(2006.01)i

According to International Patent Classification (IPC) or to both national classification and IPC

B. FIELDS SEARCHED

Minimum documentation searched (classification system followed by classification symbols)
G02F1/167, G02F1/17, G09G3/20, G09G3/34

Documentation searched other than minimum documentation to the extent that such documents are included in the fields searched
Jitsuyo Shinan Koho          1922–1996     Jitsuyo Shinan Toroku Koho     1996–2010
Kokai Jitsuyo Shinan Koho    1971–2010     Toroku Jitsuyo Shinan Koho     1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-83413 A  (Brother Industries, Ltd.),<br>10 April 2008 (10.04.2008),<br>paragraphs [0042] to [0045]; fig. 7, 8<br>& US 2009/0167754 A     & WO 2008/038455 A1 | 1 |
| P,X | JP 2009-69411 A  (Mitsubishi Pencil Co., Ltd.),<br>02 April 2009 (02.04.2009),<br>paragraphs [0027] to [0048]; fig. 5, 6<br>(Family: none) | 1-3 |
| A | JP 2008-216380 A  (Mitsubishi Pencil Co., Ltd.),<br>18 September 2008 (18.09.2008),<br>paragraphs [0037] to [0046]; fig. 4<br>(Family: none) | 1-3 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 January, 2010 (06.01.10)

Date of mailing of the international search report
19 January, 2010 (19.01.10)

Name and mailing address of the ISA/
Japanese Patent Office

Authorized officer

Facsimile No.

Telephone No.

Form PCT/ISA/210 (second sheet) (April 2007)

17

**INTERNATIONAL SEARCH REPORT**

| International application No. |
| --- |
| PCT/JP2009/006694 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-527024 A  (Koninklijke Philips Electronics N.V.),<br>20 September 2007 (20.09.2007),<br>paragraphs [0025] to [0028]; fig. 6<br>& US 2006/0187187 A1    & EP 1644915 A<br>& WO 2005/004095 A2     & KR 10-2006-0021918 A<br>& CN 1816840 A | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003005227 A